# DEMANDE DE BREVET EUROPEEN

(11) **EP 3 531 188 A1**
(43) Date de publication de la demande: **28.08.2019**
(21) Numéro de dépôt: 18305186.1
(22) Date de dépôt: 22.02.2018
(51) Int. Cl.: G02B 27/01

(54) **SYSTÈME D'AFFICHAGE TÊTE HAUTE**

(71) Demandeur: Valeo Comfort and Driving Assistance, 94046 Créteil Cedex (FR)
(72) Inventeur: DELPIERRE, Laurent, 94046 Créteil CEDEX (FR); BOMBARD, Stéphane, 94046 Créteil CEDEX (FR); BLANC, Eric, 94046 Créteil CEDEX (FR); ALRIC, Jean-Christophe, 94046 Créteil CEDEX (FR); LE TOUMELIN, Loic, 74321 Bietigheim-Bissingen (DE); DUBOIS, Christian, 78322 Le Mesnil Saint Denis (FR)
(74) Mandataire: Delplanque, Arnaud

(57) **Abrégé**

Un système d'affichage tête haute (1) comprend :
- un dispositif de génération d'images conçu pour générer un faisceau lumineux,
- une lame partiellement transparente (5) mobile conçue pour afficher le faisceau lumineux,
- un boîtier (3) conçu pour recevoir la lame partiellement transparente et le dispositif de génération d'images, et
- un dispositif d'entrainement (9) conçu pour déplacer la lame partiellement transparente (5) autour d'un axe de rotation.

Ledit dispositif d'entrainement (9) est actionné par un bouton rotatif (11) distant du boîtier (3).

## Description

### DOMAINE TECHNIQUE AUQUEL SE RAPPORTE L'INVENTION

La présente invention concerne de manière générale le domaine des afficheurs tête haute pour véhicules automobiles.

Elle concerne plus particulièrement un système d'affichage tête haute.

### ARRIERE-PLAN TECHNOLOGIQUE

Pour faciliter et rendre plus sûre la conduite d'un véhicule automobile, on souhaite éviter que le conducteur ne soit forcé de détourner son regard de la route qu'il emprunte.

Pour cela, il est connu d'utiliser un afficheur tête-haute, capable d'afficher des informations élémentaires (vitesse du véhicule, direction à suivre, etc.) et des informations de sécurité (dysfonctionnement du moteur, présence d'obstacle, etc.) à la hauteur du regard du conducteur.

Un afficheur tête haute comprend généralement un boîtier placé sur le tableau de bord du véhicule, plus précisément sur la partie supérieure du tableau de bord à proximité du pare-brise.

Dans le boîtier est généralement logé un dispositif de génération d'images qui produit des rayons lumineux transportant des images. Une lame partiellement transparente fixée sur le boîtier (éventuellement de façon mobile) réfléchit ces rayons lumineux en direction du conducteur de manière à former des images virtuelles dans le champ de vision du conducteur. Les images virtuelles, comportant les informations à afficher, se superposent alors visuellement à l'environnement faisant face au véhicule.

Pour que le conducteur puisse effectivement visualiser ces images virtuelles quand il est en position de conduite, ses yeux doivent être situés dans une zone de l'espace atteinte, en sortie de l'afficheur, par une partie au moins des rayons lumineux émis par l'unité de génération d'image.

Pour permettre de régler la position verticale de la zone de l'espace atteinte et ainsi l'adapter à la taille du conducteur, les systèmes de l'art antérieur permettent au conducteur de modifier l'orientation de la lame partiellement transparente par rapport à la position de ses yeux par des moyens manuels, notamment grâce à un bouton rotatif.

Cependant, dans l'art antérieur le bouton rotatif est situé sur le boîtier de l'afficheur tête haute. Ainsi, pour pouvoir atteindre le bouton rotatif et donc effectuer le réglage de la lame partiellement transparente, le conducteur est amené à se pencher vers l'avant, quittant ainsi sa position de conduite. Il est donc difficile pour le conducteur de se rendre compte, pendant le réglage, si ses yeux en position de conduite seront bien situés dans la zone de l'espace atteinte par les images virtuelles.

On comprend qu'un afficheur tête haute muni d'un moyen de rotation de la lame partiellement transparente selon l'art antérieur est peu pratique.

### OBJET DE L'INVENTION

Afin de remédier à l'inconvénient précité de l'état de la technique, la présente invention propose un système d'affichage tête haute comprenant un dispositif de génération d'images conçu pour générer un faisceau lumineux, une lame partiellement transparente conçue pour réfléchir en partie le faisceau lumineux, un boîtier conçu pour recevoir la lame partiellement transparente et le dispositif de génération d'images, et un dispositif d'entrainement conçu pour déplacer la lame partiellement transparente autour d'un axe de rotation par rapport au boîtier.

Selon l'invention, le dispositif d'entrainement est actionné par un bouton rotatif distant du boîtier.

En permettant au conducteur de déplacer la lame partiellement transparente en rotation grâce à un bouton rotatif distant du boîtier, le système d'affichage tête haute simplifie l'accès audit bouton rotatif et permet d'améliorer la précision du positionnement en rotation de la lame partiellement transparente.

D'autres caractéristiques non limitatives et avantageuses du système conforme à l'invention, prises individuellement ou selon toutes les combinaisons techniquement possibles, sont les suivantes :
- le dispositif d'entrainement comprend un moyen de transmission mécanique permettant l'entrainement en rotation de la lame partiellement transparente quand le bouton rotatif est actionné,
- le moyen de transmission mécanique comprend un câble d'entraînement,
- le câble présente une première tête de liaison,
- ladite première tête de liaison est raccordée au niveau du bouton rotatif,
- le câble présente une deuxième tête de liaison, ladite deuxième tête de liaison étant raccordée à une pièce de soutien de la lame partiellement transparente,
- le câble est mobile à l'intérieur d'une gaine,
- ladite gaine est maintenue fixe entre le boitier et un support du bouton rotatif,
- le dispositif d'entrainement comprend en outre une came,
- la came est fixée sur la pièce de soutien de la lame partiellement transparente,
- la came comprend un chemin de came,
- le chemin de came présente une trajectoire coudée,
- le dispositif d'entrainement comprend en outre un levier de manoeuvre,
- le chemin de came reçoit un suiveur de came solidaire d'une des extrémités du levier de manoeuvre,
- le dispositif d'entrainement est conçu pour déplacer la lame partiellement transparente dans le sens trigonométrique et dans le sens anti-trigonométrique autour de l'axe de rotation.

### DESCRIPTION DETAILLEE D'UN EXEMPLE DE REALISATION

La description qui va suivre en regard des dessins annexés, donnés à titre d'exemples non limitatifs, fera bien comprendre en quoi consiste l'invention et comment elle peut être réalisée.

Sur les dessins annexés :
- la figure 1 illustre schématiquement un système d'affichage tête-haute selon l'invention,
- la figure 2 illustre schématiquement un exemple de câble d'entrainement utilisable dans le système d'affichage tête-haute de la figure 1,
- la figure 3 illustre schématiquement une partie de ce câble d'entrainement au niveau d'un bouton rotatif,
- la figure 4 illustre schématiquement une partie du système d'affichage tête-haute de la figure 1 avec une lame partiellement transparente en position repliée,
- la figure 5 illustre schématiquement une partie du système d'affichage tête-haute de la figure 1 avec la lame partiellement transparente en position déployée,
- la figure 6 illustre un exemple de came selon une variante de l'invention,
- la figure 7 illustre un autre exemple de came selon la variante de l'invention,
- la figure 8 illustre un levier de manoeuvre selon la variante de l'invention,
- la figure 9 illustre schématiquement une coupe du système d'affichage tête-haute où la lame partiellement transparente est en position repliée selon la variante de l'invention,
- la figure 10 illustre schématiquement une coupe du système d'affichage tête-haute où la lame partiellement transparente est en position déployée selon la variante de l'invention.

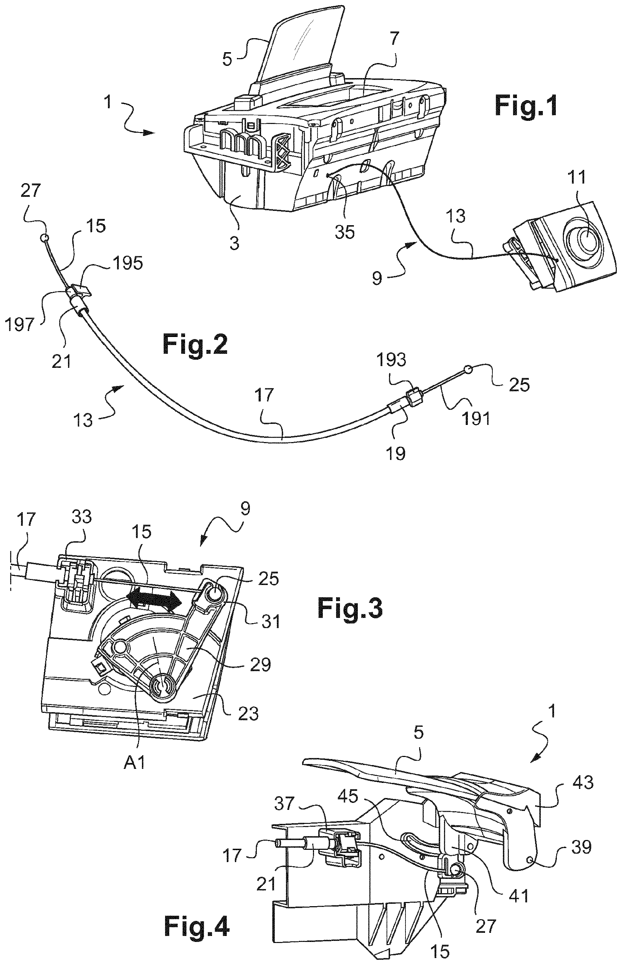

Sur la figure 1, on a représenté un système d'affichage tête haute 1, destiné à équiper un véhicule, par exemple un véhicule automobile, un train, un bateau tel qu'une péniche, un tramway ou un bus.

Le système d'affichage tête haute 1 comprend un boîtier 3 situé au niveau de la partie supérieure du tableau de bord du véhicule. Le boîtier 3 reçoit une lame partiellement transparente 5. Cette lame partiellement transparente 5 est apte à réfléchir vers les yeux du conducteur un faisceau lumineux en provenance d'une unité de génération d'image logée dans le boîtier 3. Le faisceau lumineux généré à l'intérieur du boîtier 3 en sort grâce à une ouverture 7 située sur une face supérieure du boîtier 3.

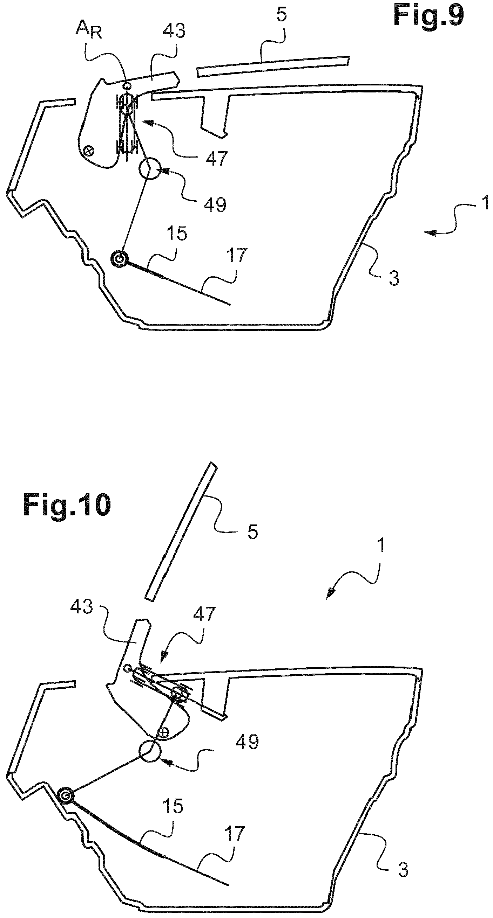

La lame partiellement transparente 5 est montée mobile en rotation sur le boîtier 3. En utilisation, la lame partiellement transparente 5 est en position déployée, tel que visible sur la figure 1. Quand elle n'est pas en utilisation, le conducteur peut la mettre en position repliée, telle que visible sur la figure 4. Pour changer de position, la lame partiellement transparente 5 effectue une rotation autour d'un axe A_{R} visible sur la figure 9.

Afin de déplacer la lame partiellement transparente 5 autour de l'axe de rotation A_{R}, le système d'affichage tête haute 1 comprend un dispositif d'entrainement 9 qui est actionné par un bouton rotatif 11 distant du boîtier 3. Le dispositif d'entrainement 9 est conçu pour déplacer la lame partiellement transparente 5 dans le sens trigonométrique et dans le sens antitrigonométrique autour de l'axe de rotation A_{R}, c'est-à-dire pour la déployer et pour la replier.

Le bouton rotatif 11 est par exemple situé sur la face avant du tableau de bord du véhicule, c'est-à-dire face au conducteur. Le bouton rotatif 11 peut aussi être situé sur une partie la face supérieure du tableau de bord à proximité du conducteur. De manière préférentielle, le conducteur peut actionner manuellement le bouton rotatif 11 en restant en position de conduite, c'est-à-dire sans avoir à se pencher vers l'avant ou latéralement.

Afin de transmettre le mouvement mécanique du bouton rotatif 11 distant à la lame partiellement transparente 5, le dispositif d'entrainement 9 comprend un moyen de transmission mécanique 13.

Le moyen de transmission mécanique 13 permet de transmettre un mouvement engendré par la rotation du bouton rotatif 11 à la lame partiellement transparente 5.

Le moyen de transmission mécanique 13 comprend un câble 15 d'entraînement sensiblement rigide représenté sur la figure 2. Le moyen de transmission mécanique 13 comprend en outre une gaine 17 à l'intérieur de laquelle le câble 15 est mobile.

La gaine 17 présente à ses extrémités un premier dispositif d'attache 19 et un deuxième dispositif d'attache 21. Le premier dispositif d'attache 19 comprend par exemple une première collerette 191 sur laquelle sont disposées des nervures 193. Le deuxième dispositif d'attache 21 comprend par exemple une aile faisant saillie d'une deuxième collerette 197. Grâce à ses dispositifs d'attache 19, 21 la gaine 17 est maintenue fixe entre le boitier 3 (figure 4) et un support 23 du bouton rotatif 11 (figure 3).

Les dispositifs d'attache 19, 21 ainsi que leurs dispositifs d'attache complémentaires 33, 37 (figures 3 et 4) de gaine 17 sont bien connus de l'homme du métier et ne seront pas décrits en détails.

Le câble 15 présente deux têtes de liaison 25, 27 chacune portée par une de ses deux extrémités.

Comme illustré par la figure 3, une première tête de liaison 25 est raccordée au niveau du bouton rotatif 11. Plus précisément, la première tête de liaison 25 est fixée à un levier de commande 29 monté en rotation autour d'un axe de levier A₁ sur une face arrière du support 23 du bouton rotatif 11. Ici, la face arrière désigne la face située dans le tableau de bord et cachée au conducteur. Par opposition, la face avant du support 23 désigne une face du support 23 portant le bouton rotatif 11 et visible au conducteur.

Le levier de commande 29 est raccordé au bouton rotatif 11, ainsi quand le conducteur met le bouton rotatif 11 en rotation, le levier de commande 29 pivote autour de l'axe de levier A₁. Le bouton rotatif 11 peut être tourné dans le sens des aiguilles d'une montre ou dans le sens contraire des aiguilles d'une montre. Le levier de commande 29 peut donc pivoter dans deux directions.

Le levier de commande 29 comprend un premier organe de réception 31 de la première tête de liaison 25. Ledit premier organe de réception 31 permet de maintenir la première tête de liaison 25 solidaire au bouton rotatif 11. Ainsi, la rotation du bouton rotatif 11 entraîne un déplacement du câble 15 dans la gaine 17.

De plus, la face arrière du support 23 comprend un premier dispositif d'attache complémentaire 33 du premier dispositif d'attache 19 de la gaine 17. Le premier dispositif d'attache complémentaire 33 comprend par exemple un dispositif d'emboîtement permettant de maintenir la gaine 17 fixe sur le support 23. La gaine 17 s'étend jusqu'au boîtier 3 du système d'affichage tête haute 1. Plus précisément, la gaine 17 pénètre dans le boîtier 3 grâce à une ouverture 35 prévue à cet effet et illustrée sur la figure 1.

Sur la figure 4, un deuxième dispositif d'attache complémentaire 37 capable de recevoir le deuxième dispositif d'attache 21 est illustré. Le deuxième dispositif d'attache complémentaire 37 permet de maintenir la gaine 17 dans le boîtier 3.

Le câble 15 s'étend à l'intérieur de la gaine 17 et pénètre lui aussi dans le boîtier 3.

La deuxième tête de liaison 27 du câble 15 est maintenue à l'intérieur du boîtier 3 par un deuxième organe de réception 39. Le deuxième organe de réception 39 est porté par un bras 41 faisant saillie d'une pièce de soutien 43 de la lame partiellement transparente 5.

La pièce de soutien 43 est montée en rotation dans le boîtier 3. Elle est apte à être entraînée en rotation autour de l'axe de rotation A_{R} par le dispositif d'entraînement 9.

Afin de restreindre l'amplitude de la rotation autour de l'axe de rotation A_{R} et ainsi de définir les positions repliée et déployée de la lame partiellement transparente 5, le bras 41 comprend en outre un élément suiveur (non représenté) coopérant avec un chemin de guidage 45 porté par le boîtier 3.

Ainsi, quand le conducteur veut régler la rotation de la lame partiellement transparente 5, il tourne le bouton rotatif 11. Le levier de commande 29 effectue lui-même une rotation autour de l'axe de levier A₁, ce qui entraîne une translation du câble 15 dans la gaine 17. La translation du câble 15 dans la gaine 17 entraîne la rotation de la pièce de soutien 43 autour de l'axe de rotation A_{R}. Ainsi, la lame partiellement transparente 5 est elle-même entraînée en rotation autour de l'axe de rotation A_{R}.

La direction de la translation du câble 15 dépend du sens de rotation du bouton rotatif 11. Dans notre exemple, une translation du câble 15 vers l'avant du véhicule entraine une rotation de la lame partiellement transparente 5 permettant de l'abaisser en direction du boîtier 3 jusqu'à atteindre la position repliée.

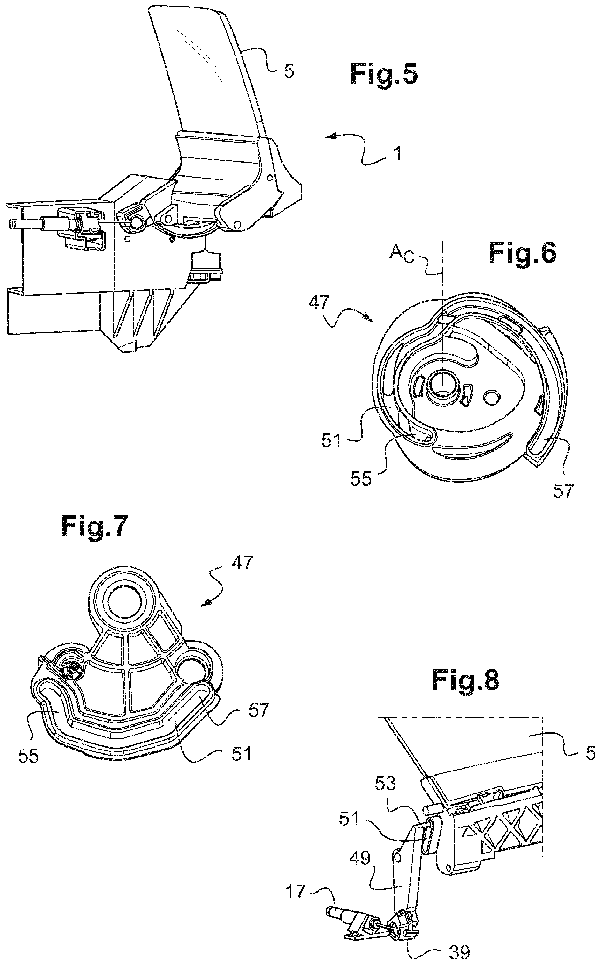

Au contraire, une translation du câble 15 vers l'arrière du véhicule entraine une rotation de la lame partiellement transparente 5 permettant de la remonter en direction du pare-brise jusqu'à atteindre la position déployée visible sur la figure 5.

Un tel dispositif d'entrainement 9 permet en outre d'obtenir des positions de rotation intermédiaires de la lame partiellement transparente 5, ainsi le conducteur peut régler la position de ladite lame partiellement transparente 5 de façon précise afin que l'image virtuelle qu'elle affiche corresponde au mieux à l'emplacement de ses yeux pendant la conduite.

Selon une variante de l'invention, le dispositif d'entraînement mécanique 9 comprend en outre une came 47 (dont deux exemples sont représentés respectivement sur les figures 6 et 7), ainsi qu'un levier de manoeuvre 49 représenté sur la figure 8.

Selon le premier exemple représenté en figure 6, la came 47 présente une forme générale de disque autour d'une axe de rotation de came A_{C}.

Selon le second exemple représenté sur la figure 7, la came 47 présente une forme de secteur angulaire par rapport à l'axe de rotation de came A_{C}.

Dans les deux cas, la came est fixée sur la pièce de soutien 43 de la lame partiellement transparente 5.

Un chemin de came 51 est disposé sur la came 47 (figures 6 et 7). Le chemin de came 51 reçoit un suiveur de came 53 solidaire d'une des extrémités du levier de manoeuvre 49 (figure 8). L'autre extrémité du levier de manoeuvre 49 porte le deuxième organe de réception 39 de la deuxième tête de liaison 27 du câble 15. Ainsi le levier de manoeuvre 49 permet de transmettre le mouvement du câble 15 à la came 47.

Le chemin de came 51 présente une trajectoire coudée permettant au suiveur de came 53 de s'éloigner plus ou moins de l'axe de rotation de came A_{C}. L'axe de rotation de came A_{C} est parallèle à l'axe de rotation A_{R}.

Quand le suiveur de came 53 se trouve en début de trajectoire 55, la lame partiellement transparente 5 est en position repliée (figure 9). Le chemin de came 51 est alors proche de l'axe de rotation de came A_{C}. Ainsi, quand le conducteur actionne le bouton rotatif 11, le dispositif d'entraînement 9 permet une rotation rapide de la lame partiellement transparente 5.

Quand le suiveur de came 53 s'approche d'une fin de trajectoire 57, la lame partiellement transparente 5 s'approche de sa position déployée (figure 10). Le chemin de came est alors 51 est alors éloigné de l'axe de rotation de came A_{C}. La rotation de la lame partiellement transparente 5 est plus lente. Ainsi, le conducteur peut effectuer un réglage fin de la rotation de la lame partiellement transparente 5 afin de trouver la position qui lui convient au mieux.

## Revendications

1. Système d'affichage tête haute (1) comprenant :
- un dispositif de génération d'images conçu pour générer un faisceau lumineux,
- une lame partiellement transparente (5) conçue pour réfléchir en partie le faisceau lumineux,
- un boîtier (3) conçu pour recevoir la lame partiellement transparente (5) et le dispositif de génération d'images,
- un dispositif d'entrainement (9) conçu pour déplacer la lame partiellement transparente (5) autour d'un axe de rotation (A_{R}) par rapport au boîtier (3),
**caractérisé en ce que** ledit dispositif d'entrainement (9) est actionné par un bouton rotatif (11) distant du boîtier (3).

2. Système d'affichage tête haute (1) selon la revendication précédente, dans lequel ledit dispositif d'entrainement (9) comprend un moyen de transmission mécanique (13) permettant l'entrainement en rotation de la lame partiellement transparente (5) quand le bouton rotatif (11) est actionné.

3. Système d'affichage tête haute (1) selon la revendication précédente, dans lequel le moyen de transmission mécanique (13) comprend un câble (15) d'entraînement.

4. Système d'affichage tête haute (1) selon la revendication précédente, dans lequel le câble (15) présente une première tête de liaison (25), ladite première tête de liaison (25) étant raccordée au niveau du bouton rotatif (11), et une deuxième tête de liaison (27), ladite deuxième tête de liaison (27) étant raccordée à une pièce de soutien (43) de la lame partiellement transparente (5).

5. Système d'affichage tête haute (1) selon l'une des deux revendications précédentes, dans lequel le câble (15) est mobile à l'intérieur d'une gaine (17), ladite gaine (17) étant maintenue fixe entre le boitier (3) et un support (23) du bouton rotatif (11).

6. Système d'affichage tête haute (1) selon l'une des revendications précédentes, dans lequel le dispositif d'entrainement (9) comprend en outre une came (47).

7. Système d'affichage tête haute (1) selon la revendication précédente, dans lequel la came (47) est fixée sur la pièce de soutien (43) de la lame partiellement transparente (5).

8. Système d'affichage tête haute (1) selon l'une des deux revendications précédentes, dans lequel la came (47) comprend un chemin de came (51).

9. Système d'affichage tête haute (1) selon la revendication précédente, dans lequel le chemin de came (51) présente une trajectoire coudée.

10. Système d'affichage tête haute (1) selon l'une des deux revendications précédentes, dans lequel le dispositif d'entrainement comprend en outre un levier de manoeuvre (49), et dans lequel le chemin de came (51) reçoit un suiveur de came (53) solidaire d'une des extrémités du levier de manoeuvre (49).

11. Système d'affichage tête haute (1) selon l'une des revendications précédentes, dans lequel le dispositif d'entrainement (9) est conçu pour déplacer la lame partiellement transparente (5) dans le sens trigonométrique et dans le sens anti-trigonométrique autour de l'axe de rotation (A_{R}).
